# EUROPEAN PATENT SPECIFICATION

(11) **EP 2 963 719 B1**
(45) Date of publication and mention of the grant of the patent: **12.04.2017**
(21) Application number: 15171798.0
(22) Date of filing: 12.06.2015
(51) Int. Cl.: H01M 8/06, H01M 8/04

(54) **FUEL CELL SYSTEM**
BRENNSTOFFZELLENSYSTEM
SYSTÈME DE PILE À COMBUSTIBLE

(30) Priority: 30.06.2014 JP 2014134695
(43) Date of publication of application: 06.01.2016
(73) Proprietor: AISIN SEIKI KABUSHIKI KAISHA, Kariya-shi, Aichi 448-8650 (JP)
(72) Inventor: Endo, Satoshi, Kariya-shi, Aichi 448-8650 (JP); Ohkawara, Hiroki, Kariya-shi, Aichi 448-8650 (JP)
(74) Representative: TBK

(56) References cited:
- DE-A1-102012 023 438
- JP-A- 2011 210 686
- US-A1- 2013 130 138

## Description

### TECHNICAL FIELD

This disclosure relates to a fuel cell system.

### BACKGROUND DISCUSSION

JP 2011-210686A (Reference 1) discloses a fuel cell power-generating apparatus (fuel cell system) in which a reformer 4, a fuel cell section G, and a combustion unit 6 configured to combust a fuel (off-gas) that is not used for power generation are provided in a storage container 10. The fuel cell power-generating apparatus includes a combustion failure detecting unit 24 including a temperature sensor that detects a combustion failure of the combustion unit 6. Reference 1 describes the following configuration. In a case where a temperature of the combustion unit 6 becomes a predetermined temperature or lower, the combustion failure is detected by the combustion failure detecting unit 24, and a power generation output is decreased without changing each of the amounts of a reforming raw material and water vapor which are supplied to the reformer 4, and the amount of air that is supplied to the fuel cell section G, and operation is retained.

However, the decrease in the temperature of the combustion unit may also occur in a case where a gas component of the reforming raw material varies without leading to the combustion failure. For example, an inert gas is mixed in the reforming raw material, an amount of heat per unit of volume of the reforming raw material decreases, and thus the temperature of the combustion unit decreases. According to this, as described in Reference 1, in the configuration in which the combustion failure is detected by the combustion failure detecting unit when the temperature of the combustion unit becomes a predetermined temperature or lower, even when the temperature of the combustion unit decreases due to a variation in a gas component, there is a problem in that erroneous determination of the combustion failure may occur. In addition, in the configuration described in Reference 1, when the combustion failure is detected, a power generation output decreases, and thus power generation efficiency of the fuel cell system decreases. DE 10 2012 023438 discloses a fuel cell system with reformer and combustor unit, temperature sensors for reformer and combustor, and raw fuel flow rate sensor. If the temperature of the combustor decreases because of higher content of inert gas in the raw fuel, the supply amount of raw fuel is increased.

### SUMMARY

Thus, a need exists for a fuel cell system capable of continuing operation without stoppage by accurately detecting a variation in a gas component of a reforming raw material.

This invention is directed to a fuel cell system including: a fuel cell that generates electricity by using a fuel and an oxidant gas; a reforming unit which generates the fuel from a reforming raw material and reforming water, and supplies the fuel to the fuel cell; a combustion unit to which a combustible gas including the fuel that is not used is introduced from the fuel cell to combust the combustible gas with the oxidant gas, and from which a combustion gas is output; a raw material supply device that supplies the reforming raw material; an oxidant gas supply device that supplies the oxidant gas; a flow rate detecting sensor that detects a flow rate of the reforming raw material that is supplied to the reforming unit; a first temperature sensor that detects a temperature of the reforming unit; a second temperature sensor that detects a temperature of the combustion unit; and a control device which determines that a gas component of the reforming raw material varies in a case where the flow rate of the reforming raw material which is detected by the flow rate detecting sensor is in a first predetermined range, and the temperature of the reforming unit which is detected by the first temperature sensor, and the temperature of the combustion unit which is detected by the second temperature sensor are in or below a second predetermined range and in or below a third predetermined range, respectively, and which changes operation conditions of the fuel cell system.

According to the aspect of this invention the fuel cell system is provided with the control device which determines that the gas component of the reforming raw material varies in a case where the flow rate of the reforming raw material which is detected by the flow rate detecting sensor is in the first predetermined range, and the temperature of the reforming unit which is detected by the first temperature sensor, and the temperature of the combustion unit which is detected by the second temperature sensor are in or below the second predetermined range and in or below the third predetermined range, respectively, and which changes the operation conditions of the fuel cell system, so as to decrease threshold values which are set to define the predetermined ranges of the first temperature sensor and the second temperature sensor.

According to this configuration, it is possible to suppress a decrease in a temperature of the combustion unit due to the variation in the gas component of the reforming raw material from being erroneously determined as a combustion failure, and a change is made in which operation conditions are made appropriate for the variation in the gas component of the reforming raw material. Accordingly, it is possible to continue the operation of the fuel cell system.

Another aspect of this disclosure is directed to the fuel cell system according to the aspect of this disclosure described above, wherein the control device changes the operation conditions of the fuel cell system in such a manner that the amount of the reforming raw material to be supplied to the reforming unit increases.

According to this aspect, the control device changes the operation conditions of the fuel cell system in such a manner that the amount of the reforming raw material to be supplied to the reforming unit increases, and thus it is possible to raise the temperature of the combustion unit due to an increase of the reforming raw material. Accordingly, it is possible to perform more efficient operation in the fuel cell system.

Still another aspect of this disclosure is directed to the fuel cell system according to the aspect of this disclosure described above, wherein in a case where at least one of the first temperature sensor and the second temperature sensor reaches the second and third predetermined ranges or over due to an increase of the reforming raw material, it is determined that a gas variation disappears, and an amount the reforming raw material that is supplied is returned to an original constant flow rate.

The invention is directed to the fuel cell system according to the aspect of this disclosure described above, wherein the control device changes the operation conditions of the fuel cell system so as to decrease threshold values which are set to define the predetermined ranges of the first temperature sensor and the second temperature sensor.

According to this aspect, the control device changes the operation conditions of the fuel cell system so as to decrease the threshold values which are set to define the predetermined ranges of the first temperature sensor and the second temperature sensor, and thus a reforming temperature and a combustion temperature are in predetermined ranges, respectively. Accordingly, it is possible to continue the operation of the fuel cell system.

Still yet another aspect of this disclosure is directed to the fuel cell system according to the aspect of this disclosure described above, wherein in a case where at least one of the first temperature sensor and the second temperature sensor reaches the second and third predetermined ranges or higher due to a decrease in the threshold values, it is determined that a gas variation disappears, and the threshold values are returned to original threshold values.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating the outline of a fuel cell system illustrating an example of an embodiment disclosed here;
Fig. 2 is a flowchart of a control program that is executed by a control device illustrated in Fig. 1;
Fig. 3 is a diagram illustrating a relationship between a temperature of a reforming unit and a composition of a reformed gas; and
Fig. 4 is a flowchart of a control program which illustrates a modification example disclosed here and corresponds to Fig. 2.

### DETAILED DESCRIPTION

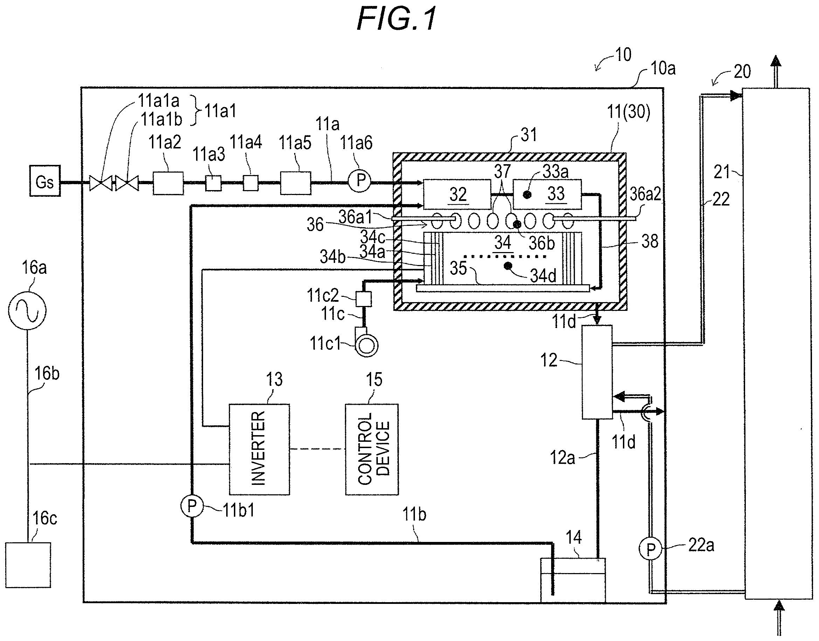

Hereinafter, an embodiment of a fuel cell system will be described. As illustrated in Fig. 1, the fuel cell system includes a power generation unit 10 and a hot water storage tank 21. The power generation unit 10 includes a casing 10a, a fuel cell module 11, a heat exchanger 12, an inverter device 13, a water tank 14, and a control device 15.

As described later, the fuel cell module 11 includes at least a fuel cell 34. A reforming raw material, reforming water, and cathode air are supplied to the fuel cell module 11. Specifically, the other end of a reforming raw material supply tube 11a (fuel supply tube), of which one end is connected to a supply source Gs and through which the reforming raw material is supplied, is connected to the fuel cell module 11. In addition, the other end of a water supply tube 11b, of which one end is connected to the water tank 14 and through which the reforming water is supplied, is connected to the fuel cell module 11. The water supply tube 11b is provided with a reforming water pump 11b1. In addition, the other end of a cathode air supply tube 11c, of which one end is connected to a cathode air blower 11c1 as an oxidant gas supply device and through which the cathode air is supplied, is connected to the fuel cell module 11. The cathode air supply tube 11c is provided with a flow rate sensor 11c2 that detects a flow rate of the cathode air supplied to the fuel cell 34, that is, a flow rate per unit of time.

The reforming raw material supply tube 11a will be described in detail. The reforming raw material supply tube 11a is provided with a fuel shut-off valve 11a1, a desulfurizer 11a2, a flow rate detecting sensor 11a3, a pressure sensor 11a4, a buffer tank 11a5, and a raw material pump 11a6 as a raw material supply device in this order from an upstream side. The fuel shut-off valve 11a1, the desulfurizer 11a2, the flow rate detecting sensor 11a3, the pressure sensor 11a4, the buffer tank 11a5, and the raw material pump 11a6 are stored in the casing 10a.

The fuel shut-off valve 11a1 is a valve (2-spool valve) that shuts off the reforming raw material supply tube 11a in an openable and closable manner in response to a command of the control device 15. Specifically, the fuel shut-off valve 11a1 is constituted by a first fuel shut-off valve 11a1a and a second fuel shut-off valve 11a1b which shut off the reforming raw material supply tube 11a in an openable and closable manner.

The first fuel shut-off valve 11a1a is opened and closed in accordance with a control signal transmitted from the control device 15. The second fuel shut-off valve 11a1b is opened and closed in accordance with a control signal transmitted from the control device 15. However, auxiliary machinery is used for power generation in the fuel cell 34. Examples of the auxiliary machinery include the first and second fuel shut-off valves 11a1a and 11a1b, the respective pumps 11a6, 11b1, and 22a, the cathode air blower 11c1, and the respective sensors 11a3, 11a4, 11c2, 34d, and 36d which are described in this specification.

The desulfurizer 11a2 removes sulfur contained (for example, a sulfur compound) in the reforming raw material. The flow rate detecting sensor 11a3 detects a flow rate of the reforming raw material that is supplied to a reforming unit 33, that is, a flow rate per unit of time, and transmits a detection result to the control device 15. The pressure sensor 11a4 detects a pressure of the reforming raw material and transmits a detection result to the control device 15. The buffer tank 11a5 rectifies a gas flow of the raw material pump 11a6. The raw material pump 11a6 is a supply device that supplies the reforming raw material to the reforming unit 33, and adjusts an amount (supply flow rate (flow rate per unit time)) of the reforming raw material that is supplied from the supply source Gs in response to a control command value transmitted from the control device 15.

In addition, in the reforming raw material supply tube 11a, a check valve (not illustrated) may be arranged between the raw material pump 11a6 and the fuel cell module 11 (evaporation section 32). In addition, disposition of the fuel shut-off valve 11a1, the desulfurizer 11a2, the flow rate detecting sensor 11a3, the pressure sensor 11a4, the buffer tank 11a5, and the raw material pump 11a6 is not limited to being disposed in the above-described order.

The fuel cell module 11 (30) includes a casing 31, the evaporation section 32, a reforming unit 33, and the fuel cell 34. The casing 31 is formed from a metallic material. The evaporation section 32 is heated by a combustion gas to be described later, evaporates the reforming water that is supplied to generate water vapor, and preheats the reforming raw material that is supplied. The evaporation section 32 mixes the water vapor that is generated in this manner, and the reforming raw material that is preheated, and supplies the resultant mixture to the reforming unit 33. Examples of the reforming raw material include a refining gas fuel such as a natural gas and an LP gas, and a refining liquid fuel such as kerosene, gasoline, and methanol. In this embodiment, description will be given of the natural gas.

The other end of the water supply tube 11b, of which the one end (lower end) is connected to the water tank 14, is connected to the evaporation section 32. In addition, the reforming raw material supply tube 11a, of which the one end is connected to the supply source Gs, is connected to the evaporation section 32. Examples of the supply source Gs include a gas supply tube for town gas, and a gas cylinder for an LP gas.

The reforming unit 33 is heated by the above-described combustion gas, and heat necessary for a water vapor reforming reaction is supplied by the heating. According to this, the reforming unit 33 generates a reformed gas from a mixed gas (reforming raw material, water vapor) that is supplied from the evaporation section 32, and outputs the reformed gas. The reforming unit 33 is filled with a catalyst (for example, a Ru or Ni based catalyst), the mixed gas is reformed through a reaction by the catalyst and generates a gas that contains hydrogen gas, carbon monoxide, and the like (a so-called water vapor reforming reaction). The reformed gas contains hydrogen, carbon monoxide, carbon dioxide, water vapor, a natural gas (methane gas) that is not reformed, and reforming water (water vapor) that is not used for reforming. As described, the reforming unit 33 generates a reformed gas (fuel) from the reforming raw material and the reforming water, and supplies the reformed gas to the fuel cell 34. In addition, the water vapor reforming reaction is an endothermic reaction. The reforming unit 33 is provided with a first temperature sensor 33a that detects a temperature Tk of the reforming unit 33. A detection result (output signal) of the first temperature sensor 33a is transmitted to the control device 15.

The fuel cell 34 has a configuration in which a plurality of cells 34a including a fuel electrode, an air electrode (oxidant electrode), and an electrolyte interposed between both of the electrodes are laminated. The fuel cell of this embodiment is a solid oxide type fuel cell, and zirconium oxide that is a kind of solid oxide is used as the electrolyte. As a fuel, hydrogen, carbon monoxide, a methane gas, and the like are supplied to the fuel electrode of the fuel cell 34. The operation temperature is approximately 400°C to 1000°C.

A fuel passage 34b, through which the reformed gas that is a fuel passes, is formed on a fuel electrode side of the cell 34a. An air passage 34c, through which air (cathode air) that is an oxidant gas flows, is formed on an air electrode side of the cell 34a. The fuel cell 34 is provided with the temperature sensor 34d that detects a temperature of the fuel cell 34. The temperature sensor 34d transmits a detection result to the control device 15.

The fuel cell 34 is provided on a manifold 35. The reformed gas is supplied from the reforming unit 33 to the manifold 35 through a reformed gas supply tube 38. A lower end (one end) of the fuel passage 34b is connected to a fuel outlet port of the manifold 35, and the reformed gas, which is emitted from the fuel outlet port, is introduced from the lower end and is emitted from an upper end. The cathode air delivered by the cathode air blower 11c1 is supplied through the cathode air supply tube 11c, and the cathode air is introduced from a lower end of the air passage 34c and is emitted from an upper end thereof.

A combustion unit 36 is provided between the fuel cell 34, the evaporation section 32, and the reforming unit 33. In the combustion unit 36, an anode off-gas (fuel off-gas) from the fuel cell 34, and a cathode off-gas (oxidant off-gas) from the fuel cell 34 are combusted to heat the reforming unit 33.

In the combustion unit 36, the anode off-gas is combusted, and a flame 37 is generated. In the combustion unit 36, the anode off-gas is combusted, and a combustion exhaust gas is generated. The combustion unit 36 is provided with a pair of ignition devices 36a1 and 36a2 which ignite the anode off-gas. In addition, the combustion unit 36 is provided with the second temperature sensor 36b that detects a temperature Tn of the combustion unit 36. A detection result (output signal) of the second temperature sensor 36b is transmitted to the control device 15.

The heat exchanger 12 is a heat exchanger to which the combustion exhaust gas exhausted from the fuel cell module 11 and stored hot water from the hot water storage tank 21 are supplied, and in which heat exchange between the combustion exhaust gas and the stored hot water occurs. Specifically, the hot water storage tank 21 stores hot water, and a stored hot water circulation line 22, through which stored hot water circulates (circulates in an arrow direction in the drawing), is connected to the hot water storage tank 21. On the stored hot water circulation line 22, the stored hot water circulation pump 22a and the heat exchanger 12 are arranged in this order from a lower end of the hot water storage tank 21 toward an upper end thereof. An exhaust pipe 11d from the fuel cell module 11 is connected to the heat exchanger 12 (forms a pipeline). A condensed water supply tube 12a, which is connected to the water tank 14, is connected to the heat exchanger 12.

With regard to the heat exchanger 12, the combustion exhaust gas transmitted from the fuel cell module 11 passes through the exhaust pipe 11d, and is introduced into the heat exchanger 12. In the heat exchanger 12, heat exchange with the stored hot water is performed, and thus the combustion exhaust gas is condensed and is cooled down. The combustion exhaust gas after condensation is discharged to the outside through the exhaust pipe 11d. In addition, the condensed water passes through the condensed water supply tube 12a, and is supplied to the water tank 14. In addition, the water tank 14 is configured to purify the condensed water with an ion exchange resin.

An exhaust heat recovery system 20 is constituted by the heat exchanger 12, the hot water storage tank 21, and the stored hot water circulation line 22. The exhaust heat recovery system 20 recovers exhaust heat of the fuel cell module 11 and stores the exhaust heat in the stored hot water.

In addition, a DC voltage that is output from the fuel cell 34 is input to the inverter device 13. The inverter device inverts the DC voltage into a predetermined AC voltage, and outputs the AC voltage to a power supply line 16b that is connected to an AC system power supply 16a and an external power load 16c (for example, electric appliances). In addition, when an AC voltage from the system power supply 16a is input through the power supply line 16b, the inverter device 13 converts the AC voltage into a predetermined DC voltage and outputs the DC voltage to the auxiliary machinery (each pump, a blower, and the like), or the control device 15. The control device 15 drives the auxiliary machinery to control the operation of the fuel cell system.

Next, description will be given of the operation of the fuel cell system. In a case where the fuel cell system is in a standby mode, the raw material pump 11a6 and the cathode air blower 11c1 are stopped, respectively.

When an activation switch (not illustrated) of the fuel cell system is turned on, the fuel cell system is activated, and an operation in accordance with a warming-up mode (the fuel cell system raises a temperature of the reforming unit 33 and the fuel cell 34, which are not in power generating operation, to a power generating operation temperature) is initiated.

When the operation in accordance with the warming-up mode is initiated, the control device 15 operates the auxiliary machinery. Specifically, the control device 15 operates the raw material pump 11a6 and the reforming water pump 11b1 to initiate supply of the reforming raw material and the condensed water (reforming water) to the evaporation section 32. In addition, the control device 15 operates the cathode air blower 11c1 to initiate supply of the cathode air to the fuel cell 34. In addition, in the combustion unit 36, the anode off-gas that is emitted from the fuel cell 34 is ignited by the ignition devices 36a1 and 36a2. When the temperature of the reforming unit 33, the fuel cell 34, and the like reaches a predetermined temperature or higher, the operation in accordance with the warming-up mode is completed, and a power generation mode operation is initiated. In the power generation mode operation, the control device 15 supplies the reformed gas and the cathode air to the fuel cell 34 by controlling the auxiliary machinery so that power generated by the fuel cell 34 becomes power consumption of the external power load 16c.

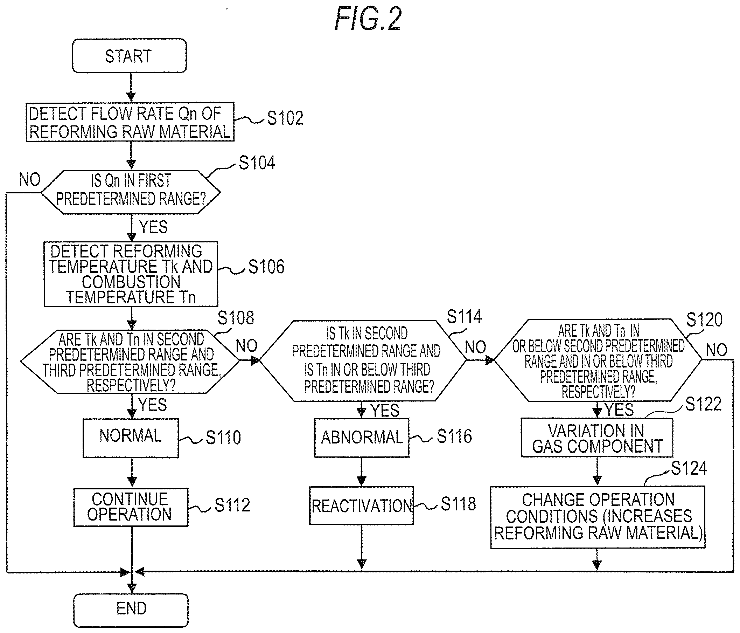

In addition, the control device 15 executes a program corresponding to a flowchart illustrated in Fig. 2 at every constant time (not part of the invention). In step S102, the control device 15 fetches a flow rate Qn of the reforming raw material which is detected by the flow rate detecting sensor 11a3 provided in the reforming raw material supply tube 11a. In step S104, it is determined whether or not the flow rate Qn of the reforming raw material which is fetched is in a first predetermined range that is determined in advance. When it is determined that the flow rate Qn of the reforming raw material is in the first predetermined range, that is, in a case where a determination result in step S104 is Y, the process transitions to step S106. In step S106, the control device 15 fetches the reforming temperature Tk and the combustion temperature Tn which are detected by the first temperature sensor 33a provided to the reforming unit 33, and the second temperature sensor 36b provided to the combustion unit 36, respectively.

In step S108, in a case where it is determined that the reforming temperature Tk that is fetched is in a second predetermined range determined in advance, and the combustion temperature Tn is in a third predetermined range determined in advance, (in a case where the determination result is Y (yes)) the control device 15 transitions the process to step S110, and determines that the operating state of the fuel cell system is normal. Subsequently, in step S112, the operation of the fuel cell system continues. In addition, the second predetermined range and the third predetermined range may be defined by the same threshold value, or threshold values different from each other.

In contrast, the determination result in step S108 is N (No), the process transitions to step S114, and in step S114, it is determined whether or not the reforming temperature Tk is in the second predetermined range, and the combustion temperature Tn is in or below the third predetermined range. Even though the reforming temperature Tk is in the second predetermine range, in a case where the combustion temperature Tn is in or below the third predetermined range, that is, is equal to or lower than the lower limit of the third predetermined range, it is determined that the operating state of the fuel cell system is abnormal, that is, the determination result in step S114 becomes Y. Accordingly, in subsequent step S116, it is determined to be abnormal. Subsequently, in step S118, the operation of the fuel cell system is stopped, and the fuel cell system is reactivated.

In a case where the determination result in step S114 is N, the process transitions to step S120, and in step S120, it is determined whether or not the reforming temperature Tk and the combustion temperature Tn are in or below the second predetermined range, and in or below the third predetermined range. In a case where the determination result in step S120 is Y, the process transitions to step S122.

Since the reforming temperature Tk and the combustion temperature Tn are in or below the predetermined ranges, in step S122, it is determined that a variation in a gas component occurs due to mixing of an inert gas into the reforming raw material rather than combustion failure of the combustion unit 36. In addition, in subsequent step S124, an instruction is given to change the operation conditions of the fuel cell system so as to increase the reforming raw material that is supplied from the supply source Gs.

That is, in step S122, the control device 15 determines that the amount of heat per unit volume of the reforming raw material (the amount of a combustible gas) decreases due to the variation in the gas component which is caused by the mixing of the inert gas into the reforming raw material that is supplied at a constant flow rate, and the like, and thus the reforming temperature Tk and the combustion temperature Tn decrease. In a case where the combustion temperature Tn decreases due to the variation in the gas component as described above, since combustion at the combustion unit 36 is retained, it is possible to continue the operation of the fuel cell system without stoppage by increasing the amount of the reforming raw material.

Since the amount of heat per unit of volume of the reforming raw material (the amount of the combustible gas) increases due to an increase of the reforming raw material, even in a case where the gas component varies due to mixing-in of the inert gas, after the increase of the reforming raw material, the reforming temperature Tk and the combustion temperature Tn are in the second and third predetermined ranges, respectively. Accordingly, the operating state of the fuel cell system is determined to be normal.

However, for example, in a case where at least one of the reforming temperature Tk and the combustion temperature Tn is in or over the second or third predetermined range due to the increase of the reforming raw material, it is determined that the variation in the gas component disappears, and the amount of reforming raw material that is supplied may be returned to the original constant flow rate.

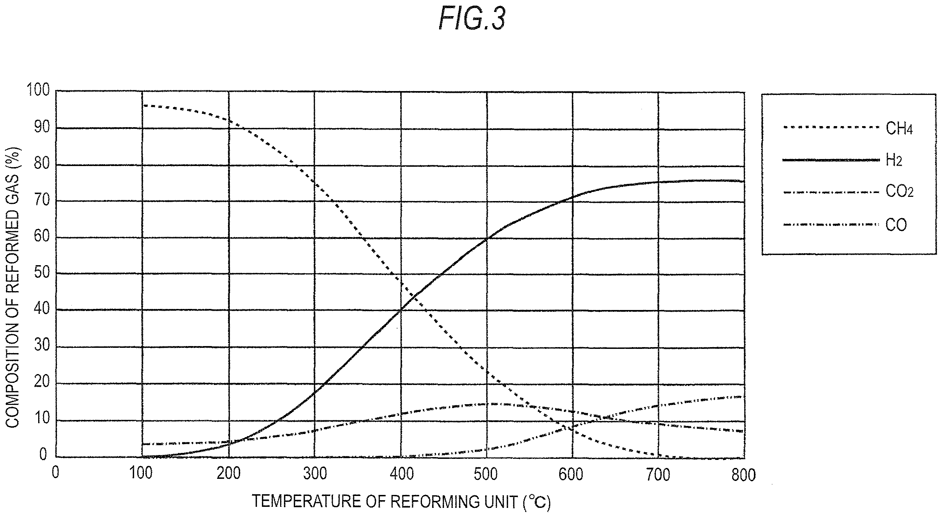

In addition, the variation in the gas component is caused by the mixing of the inert gas into the reforming raw material that is supplied. In addition to this, the variation may occur due to variation in the composition of the reformed gas in accordance with a variation in the temperature of the reforming unit 33. That is, as illustrated in Fig. 3, as the temperature of the reforming unit 33 increases, a ratio of methane (CH₄) that is contained in the reformed gas decreases. However, in contrast, a ratio of hydrogen (H₂) that is contained in the reformed gas increases. In addition, when the temperature of the reforming unit 33 varies, ratios of carbon monoxide (CO) and carbon dioxide (CO₂) which are contained in the reformed gas vary.

As described above, even when the temperature Tk of the reforming unit 33 decreases to the second predetermined range or below, the composition ratio of the reformed gas varies, and the temperature Tn of the combustion unit 36 is in or below the third predetermined range, in step S122, it is determined that the gas component varies, and an instruction is given to change the operation conditions so as to increase the reforming raw material that is supplied to the fuel cell module 11.

According to this, an erroneous determination of the combustion failure due to the decrease in the combustion temperature Tn disappears, and thus it is possible to continue the operation without stoppage of the fuel cell system. Accordingly, it is possible to efficiently operate the fuel cell system.

According to the above-described embodiment, the fuel cell system includes the flow rate detecting sensor 11a3 that detects the flow rate of the reforming raw material that is supplied to the reforming unit 33, the first temperature sensor 33a that detects the temperature of the reforming unit 33, the second temperature sensor 36b that detects the temperature of the combustion unit 36, and the control device 15 which determines that the gas component of the reforming raw material varies in a case where the flow rate of the reforming raw material which is detected by the flow rate detecting sensor 11a3 is in the first predetermined range, and the temperature of the reforming unit 33 which is detected by the first temperature sensor 33a, and the temperature of the combustion unit 36 which is detected by the second temperature sensor 36b are in or below the second predetermined range and in or below the third predetermined range, respectively, and which changes operation conditions of the fuel cell system so as to increase the reforming raw material that is supplied to the reforming unit 33.

According to this, even in a case where the temperature of the combustion unit 36 which is detected by the second temperature sensor 36b is in or below the predetermined range, the control device 15 can make a determination of a variation in the gas component of the reforming raw material instead of an erroneous determination of combustion failure. According to this, the reforming raw material that is supplied to the reforming unit 33 is increased on the basis of the variation in the gas component of the reforming raw material, and thus it is possible to continue to operate the fuel cell system without stoppage.

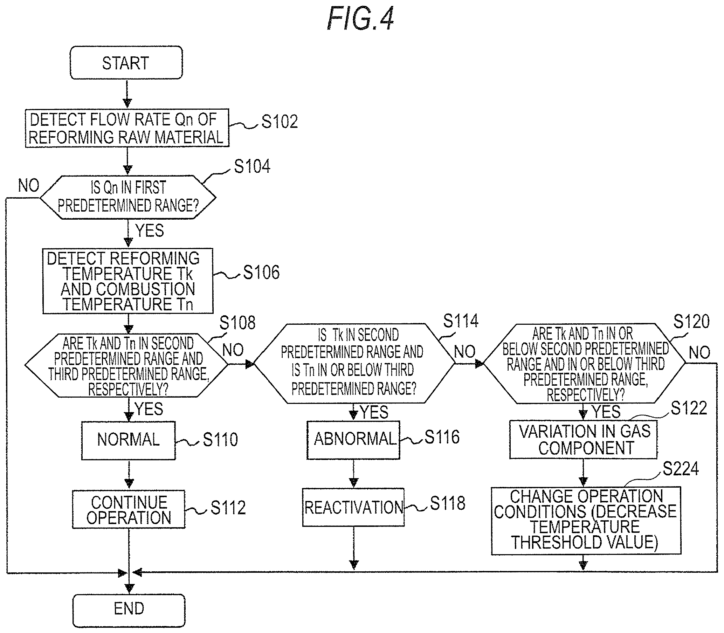

Fig. 4 illustrates an example according to the invention wherein when determination is made of a variation in the gas component, the operation conditions of the fuel cell system are changed so as to decrease threshold values which define the second and third predetermined ranges of the reforming temperature Tk and the combustion temperature Tn, respectively, instead of increasing the reforming raw material. In addition, the other configurations are the same as in the embodiment above, and thus the same reference numeral is given to the same portion as in the embodiment, and description thereof will not be repeated.

That is, in step S122 of Fig. 4, in a case where it is determined as the variation in the gas component by the control device 15, in step S224 corresponding to step S124 in the above-described embodiment, an instruction is given to change the operation conditions of the fuel cell system so as to decrease threshold values, which define the second and third predetermined ranges of the reforming temperature Tk and the combustion temperature Tn, in predetermined amounts, respectively.

According to this, even in a case where the gas component varies due to mixing-in of the inert gas and the like, when decreasing the threshold values which define the second and third predetermined ranges of the reforming temperature Tk and the combustion temperature Tn, respectively, the reforming temperature Tk and the combustion temperature Tn are in the predetermined ranges, respectively, and thus the operation state of the fuel cell system is determined to be normal.

In addition, for example, in a case where at least one of the reforming temperature Tk and the combustion temperature Tn is in or over the second or third predetermined range due to the decrease in the threshold values, as is the case with the embodiment described above, it is determined that the variation in the gas component and the like disappear, and the threshold values may be returned to the original threshold values.

According to the above-described example according to the invention, even in a case where the temperatures of the reforming unit 33 and the combustion unit 36 which are detected by the first and second temperature sensors 33a and 36b are in or below the predetermined ranges, respectively, the control device 15 can make a determination of the variation in the gas component of the reforming raw material without erroneous determination of the combustion failure. In addition, when decreasing the threshold values which define the predetermined ranges of the reforming temperature Tk and the combustion temperature Tn on the basis of the variation in the gas component of the reforming raw material, it is possible to continue the operation of the fuel cell system without stoppage thereof.

In addition, the specific configuration described in the embodiment illustrates only an example, and various forms can be employed in a range not departing from the gist of this disclosure without limitation to the specific configuration.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the scope of the present invention as defined in the claims, be embraced thereby.

A fuel cell system, includes: a fuel cell (34) generating electricity using a fuel and an oxidant gas; a reforming unit (33) generating the fuel from a reforming raw material and reforming water, and supplying the fuel to the fuel cell; a combustion unit (36) to which a combustible gas is introduced from the fuel cell to combust the combustible gas with the oxidant gas, and from which a combustion gas is output; a raw material supply device (11a6) supplying the reforming raw material; an oxidant gas supply device (11c1) supplying the oxidant gas; a flow rate detecting sensor (11a3) detecting a flow rate of the reforming raw material; a first temperature sensor (33a) detecting a temperature of the reforming unit; a second temperature sensor (33b) detecting a temperature of the combustion unit; and a control device (15) determining that a gas component of the reforming raw material varies.

## Claims

1. A fuel cell system, comprising:
a fuel cell (34) that generates electricity using a fuel and an oxidant gas;
a reforming unit (33) that generates the fuel from a reforming raw material and reforming water, and supplies the fuel to the fuel cell;
a combustion unit (36) to which a combustible gas including the fuel that is not used is introduced from the fuel cell to combust the combustible gas with the oxidant gas, and from which a combustion gas is output;
a raw material supply device (11a6) that supplies the reforming raw material;
an oxidant gas supply device (11c1) that supplies the oxidant gas;
a flow rate detecting sensor (11a3) that detects a flow rate of the reforming raw material that is supplied to the reforming unit;
a first temperature sensor (33a) that detects a temperature of the reforming unit;
a second temperature sensor (33b) that detects a temperature of the combustion unit; and
a control device (15) which determines that a gas component of the reforming raw material varies in a case where the flow rate of the reforming raw material which is detected by the flow rate detecting sensor (11a3) is in a first predetermined range, and the temperature of the reforming unit (33) which is detected by the first temperature sensor (33a), and the temperature of the combustion unit (36) which is detected by the second temperature sensor (33b) are equal to or lower than a lower limit of a second predetermined range and equal to or lower than a lower limit of a third predetermined range, respectively, and which changes operation conditions of the fuel cell system,
wherein the control device (15) changes the operation conditions of the fuel cell system so as to decrease threshold values which are set to define the predetermined ranges of the first temperature sensor (33a) and the second temperature sensor (33b).

2. The fuel cell system according to claim 1,
wherein in a case where at least one of the first temperature sensor (33a) and the second temperature sensor (33b) reaches the second and third predetermined ranges or higher due to a decrease in the threshold values, it is determined that a gas variation disappears, and the threshold values are returned to original threshold values.

## Patentansprüche

1. Brennstoffzellensystem, mit:
einer Brennstoffzelle (34), die unter Verwendung eines Brennstoffs und eines Oxidationsmittelgases Elektrizität erzeugt;
einer Reformiereinheit (33), die den Brennstoff aus einem Reformierausgangsmaterial und Reformierwasser erzeugt und den Brennstoff der Brennstoffzelle zuführt;
einer Verbrennungseinheit (36), in die von der Brennstoffzelle aus ein brennbares Gas eingeleitet wird, das den Brennstoff einschließt, der nicht genutzt wird, um das brennbare Gas mit dem Oxidationsmittelgas zu verbrennen, und aus der ein Verbrennungsgas abgegeben wird;
einer Ausgangsmaterial-Zufuhrvorrichtung (11a6), die das Reformierausgangsmaterial zuführt;
einer Oxidationsmittelgas-Zufuhrvorrichtung (11c1), die das Oxidationsmittelgas zuführt;
einem Durchflussraten-Erfassungssensor (11a3), der eine Durchflussrate des Reformierausgangsmaterials erfasst, das der Reformiereinheit zugeführt wird;
einem ersten Temperatursensor (33a), der eine Temperatur der Reformiereinheit erfasst;
einem zweiten Temperatursensor (33b), der eine Temperatur der Verbrennungseinheit erfasst; und
einer Steuerungsvorrichtung (15), die in einem Fall, in dem die Durchflussrate des Reformierausgangsmaterials, die durch den Durchflussraten-Erfassungssensor (11a3) erfasst wird, in einem ersten vorbestimmten Bereich liegt und die Temperatur der Reformiereinheit (33), die durch den ersten Temperatursensor (33a) erfasst wird, und die Temperatur der Verbrennungseinheit (36), die durch den zweiten Temperatursensor (33b) erfasst wird, jeweils kleiner oder gleich einer Untergrenze eines zweiten vorbestimmten Bereichs und kleiner oder gleich einer Untergrenze eines dritten vorbestimmten Bereichs sind, bestimmt, dass ein Gasbestandteil des Reformierausgangsmaterials schwankt, und die Betriebsbedingungen des Brennstoffzellensystems ändert,
wobei die Steuerungsvorrichtung (15) die Betriebsbedingungen des Brennstoffzellensystems so ändert, dass sie Schwellenwerte, die so eingestellt sind, dass sie die vorbestimmten Bereiche des ersten Temperatursensors (33a) und des zweiten Temperatursensors (33b) definieren, verringert.

2. Brennstoffzellensystem nach Anspruch 1,
wobei in einem Fall, in dem zumindest einer des ersten Temperatursensors (33a) und des zweiten Temperatursensors (33b) aufgrund einer Verringerung der Schwellenwerte die zweiten und dritten vorbestimmten Bereiche oder mehr erreicht, bestimmt wird, dass eine Gasschwankung verschwindet, und die Schwellenwerte zu ursprünglichen Schwellenwerten rückgeführt werden.

## Revendications

1. Système de pile à combustible, comprenant :
une pile à combustible (34) qui génère de l'électricité à l'aide d'un combustible et d'un gaz oxydant ;
une unité de reformage (33) qui génère le combustible à partir d'une matière première de reformage et d'eau de reformage, et qui fournit le combustible à la pile à combustible ;
une unité de combustion (36) dans laquelle un gaz combustible comprenant le combustible qui n'est pas utilisé est introduit depuis la pile à combustible afin de brûler le gaz combustible avec le gaz oxydant, et à partir de laquelle un gaz de combustion est délivré ;
un dispositif d'alimentation en matière première (11a6) qui fournit la matière première de reformage ;
un dispositif d'alimentation en gaz oxydant (11c1) qui fournit le gaz oxydant ;
un détecteur de débit (11a3) qui détecte un débit de la matière première de reformage qui est fournie à l'unité de reformage ;
un premier capteur de température (33a) qui détecte une température de l'unité de reformage ;
un second capteur de température (33b) qui détecte une température de l'unité de combustion ; et
un dispositif de commande (15) qui détermine qu'une composante gazeuse de la matière première de reformage varie lorsque le débit de la matière première de reformage qui est détecté par le détecteur de débit (11a3) se trouve sur une première plage prédéterminée, et que la température de l'unité de reformage (33) qui est détectée par le premier capteur de température (33a) et la température de l'unité de combustion (36) qui est détectée par le second capteur de température (33b) sont égales ou inférieures à une limite inférieure d'une seconde plage prédéterminée, et sont égales ou inférieures à une limite inférieure d'une troisième plage prédéterminée, respectivement, et qui modifie les conditions de fonctionnement du système de pile à combustible,
dans lequel le dispositif de commande (15) change les conditions de fonctionnement du système de pile à combustible de façon à réduire les valeurs de seuil qui sont définies afin de définir les plages prédéterminées du premier capteur de température (33a) et du second capteur de température (33b).

2. Système de pile à combustible selon la revendication 1,
dans lequel, lorsqu'au moins l'un du premier capteur de température (33a) et du second capteur de température (33b) atteint la seconde et la troisième plages prédéterminées ou plus en raison d'une diminution des valeurs de seuil, il est déterminé qu'une variation de gaz disparaît, et les valeurs de seuil retournent aux valeurs de seuil d'origine.
